# EUROPEAN PATENT APPLICATION

(11) **EP 3 023 275 A1**
(43) Date of publication of application: **25.05.2016**
(21) Application number: 14826814.7
(22) Date of filing: 10.07.2014
(51) Int. Cl.: B60H 1/22, B60H 1/06

(54) **VEHICLE AIR CONDITIONER AND CONSTITUENT UNIT THEREOF**

(30) Priority: 17.07.2013 JP 2013148125
(71) Applicant: Panasonic Intellectual Property Management Co., Ltd., Osaka-shi, Osaka 540-6207 (JP)
(72) Inventor: NODA, Yoshitoshi, Osaka 540-6207 (JP); TERADA, Tomohiro, Osaka 540-6207 (JP); TANIGUCHI, Katsuji, Osaka 540-6207 (JP); KURODA, Kentaro, Osaka 540-6207 (JP)
(74) Representative: Schwabe - Sandmair - Marx
(86) International application number: PCT/JP2014/003666
(87) International publication number: WO 2015/008463

(57) **Abstract**

This vehicle air conditioner includes a first water-refrigerant heat exchanger, a second water-refrigerant heat exchanger, a first switch which can switch between a state where a refrigerant fed from the second water-refrigerant heat exchanger is fed to an evaporator, and a state where the refrigerant is not fed to the evaporator, and a second switch which can switch between a state where the refrigerant fed from the second water-refrigerant heat exchanger is expanded and fed to the first water-refrigerant heat exchanger, and a state where the refrigerant is not fed to the first water-refrigerant exchanger. And the first water-refrigerant heat exchanger is connected to a heater core and a cooling portion of a heating component of a vehicle with a path of a coolant, and the second water-refrigerant heat exchanger is connected to the cooling portion of the heating component of the vehicle and the heater core with a path of a coolant.

## Description

### TECHNICAL FIELD

The present disclosure relates to a vehicle air conditioner and a constituent unit of the vehicle air conditioner.

### BACKGROUND

Conventionally, a hot water heater which warms an interior of a vehicle by using heat of engine coolant whose temperature has become high is usually adopted for a vehicle heater. Further, a heat pump cooler which cools air fed to an interior of a vehicle by using a low-temperature refrigerant of a heat pump is generally adopted for a conventional vehicle cooler.

PTL 1 discloses a vehicle air conditioner which can enhance heating performance compared to a conventional vehicle air conditioner by using a heat pump based on a conventional hot water heater and adding a configuration of heating coolant of a hot water heater.

### Citation List

### Patent Literature

PTL 1: Unexamined Japanese Patent Publication No. 10-76837

### SUMMARY

### TECHNICAL PROBLEM

The vehicle air conditioner according to PTL 1 employs a configuration where the configuration of the heat pump is used only for heating, and is not considered to be used for an operation for cooling. That is to say, when a cooling function is added to the heater according to PTL 1, how the configuration of the heat pump is used for heating and cooling in combination and how heating and cooling are switched to use have not been studied.

The present disclosure provides a vehicle air conditioner which employs a basic configuration including a hot water heater which is adopted for a conventional vehicle, and a heat pump cooler which is adopted for a conventional vehicle, can enhance heating performance at low cost and reduce an installation space which has increased compared to a conventional configuration.

### SOLUTION TO PROBLEM

A vehicle air conditioner according to one aspect of the present disclosure includes: a first water-refrigerant heat exchanger which performs a heat exchange between a low-temperature and low-pressure refrigerant and a coolant for heat transportation, and vaporizes the refrigerant; a second water-refrigerant heat exchanger which performs a heat exchange between a high-temperature and high-pressure refrigerant and the coolant, and condenses the refrigerant; a first switch which can switch between a state where the refrigerant fed from the second water-refrigerant heat exchanger is fed to an evaporator which cools an air-blast to an interior of a vehicle by using the refrigerant, and a state where the refrigerant is not fed to the evaporator; and a second switch which can switch between a state where the refrigerant fed from the second water-refrigerant heat exchanger is expanded and fed to the first water-refrigerant heat exchanger, and a state where the refrigerant is not fed to the first water-refrigerant exchanger. The first water-refrigerant heat exchanger inputs the coolant from a heater core which heats the air-blast to the interior of the vehicle, feeds the coolant to a cooling portion of a heating component of a vehicle, and feeds the refrigerant to a compressor. The second water-refrigerant heat exchanger inputs the coolant from the cooling portion of the heating component, feeds the coolant to the heater core, and inputs the high-temperature and high-pressure refrigerant through the compressor.

A constituent unit of a vehicle air conditioner according to one aspect of the present disclosure includes: a first water-refrigerant heat exchanger which performs a heat exchange between a low-temperature and low-pressure refrigerant and a coolant for heat transportation, and vaporizes the refrigerant, a second water-refrigerant heat exchanger which performs a heat exchange between a high-temperature and high-pressure refrigerant and the coolant, and condenses the refrigerant, a first switch which can switch between a state where the refrigerant fed from the second water-refrigerant heat exchanger is fed to an evaporator which cools an air-blast to an interior of a vehicle by using the refrigerant, and a state where the refrigerant is not fed to the evaporator, and a second switch which can switch between a state where the refrigerant fed from the second water-refrigerant heat exchanger is expanded and fed to the first water-refrigerant heat exchanger, and a state where the refrigerant is not fed to the first water-refrigerant exchanger. And the first and the second water-refrigerant exchangers, and the first and the second switches are integrated in the constituent unit.

### ADVANTAGEOUS EFFECT

The present disclosure can employ a basic configuration including a hot water heater which is adopted for a conventional vehicle, and a heat pump cooler which is adopted for a conventional vehicle, and can enhance heating performance by using a common compressor and a refrigerant in cooling and heating.

### BRIEF DESCRIPTION OF DRAWINGS

FIG. 1 is a configuration diagram of a vehicle air conditioner according to an exemplary embodiment of the present disclosure.
FIG. 2 is a diagram for illustrating an operation of a heat pump heating mode.
FIG. 3 is a diagram for illustrating an operation of a cooling mode.
FIG. 4 is a configuration diagram of a vehicle air conditioner according to a modified example of the exemplary embodiment of the present disclosure.

### DESCRIPTION OF EMBODIMENT

An exemplary embodiment of the present disclosure will be described below in detail with reference to the drawings.

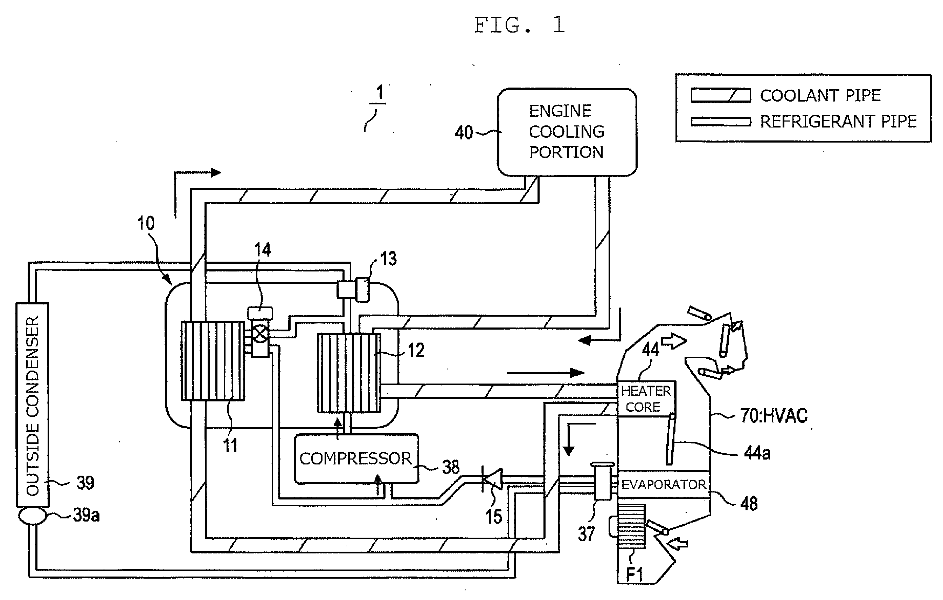

FIG. 1 is a configuration diagram of a vehicle air conditioner according to the exemplary embodiment of the present disclosure.

Vehicle air conditioner 1 according to the exemplary embodiment of the present disclosure is a device which is mounted on a vehicle including an engine (internal combustion engine) as a heating component, and adjusts air condition in the vehicle.

Vehicle air conditioner 1 according to the exemplary embodiment includes constituent unit 10, compressor (compressing machine) 38, engine cooling portion 40, heater core 44, evaporator 48, expansion valve 37, outside condenser 39, check valve 15, a coolant pipe which connect these components, and a refrigerant pipe. Heater core 44 and evaporator 48 are disposed in a suction air route of HVAC (Heating, Ventilation, and Air Conditioning) 70. HVAC 70 is provided with fan F1 which causes a suction air to flow.

Compressor 38 is driven by power of an engine or electricity, and compresses a suctioned refrigerant to a high-temperature and high-pressure refrigerant and discharges the refrigerant. The compressed refrigerant is fed to constituent unit 10. Compressor 38 suctions a low-pressure refrigerant through a junction pipe from evaporator 48 or first water-refrigerant heat exchanger 11 of constituent unit 10.

Engine cooling portion 40 includes a water jacket which causes a coolant to flow in surroundings of the engine, and a pump which causes the coolant to flow in the water jacket, and radiates heat from the engine to the coolant flowing in the water jacket. The pump is rotated by, for example, power of the engine. Engine cooling portion 40 may include a radiator which radiates heat to outside air when the amount of heat exhausted from the engine is large. A coolant path of engine cooling portion 40 passes through constituent unit 10 and continues to heater core 44.

The coolant is, for example, an antifreeze liquid such as an LLC (Long Life Coolant) and is a liquid for heat transportation.

A configuration of transporting the coolant may include only the pump of engine cooling portion 40. Consequently, it is possible to reduce the cost of the vehicle air conditioner and reduce an installation space for the vehicle air conditioner. To enhance performance of transporting the coolant, a pump may be added to another portion of the coolant pipe.

Heater core 44 is a device which performs a heat exchange between a coolant and air, and is disposed in a suction air path of HVAC 70 which supplies air to the interior of the vehicle. Heater core 44 receives a supply of the heated coolant, and radiates heat on a suction air fed to the interior of the vehicle (an air-blast to the interior of the vehicle) in a heating operation. Heater core 44 can adjust the amount of air which passes according to an opening of door 44a. Door 44a can be electrically controlled to open and close. Door 44a is also referred to as a mix door.

Evaporator 48 is a device which performs a heat exchange between a low-temperature and low-pressure refrigerant and air, and is disposed in the suction air path of HVAC 70. Evaporator 48 receives a flow of the low-temperature and low-pressure refrigerant in a cooling operation or a dehumidifying operation, and cools suction air supplied to the interior of the vehicle (an air-blast to the interior of the vehicle).

Expansion valve 37 allows a high-pressure refrigerant to expand a low-temperature and low-pressure state, and discharges the refrigerant to evaporator 48. Expansion valve 37 is disposed close to evaporator 48. Expansion valve 37 may have a function of automatically adjusting the amount of refrigerant to discharge according to a temperature of a refrigerant fed from evaporator 48.

Outside condenser 39 includes a path in which a refrigerant flows and a path in which air flows, is disposed at a head of the vehicle in an engine room and performs a heat exchange between the refrigerant and outside air. Outside condenser 39 receives a flow of a high-temperature and high-pressure refrigerant in the cooling mode and the dehumidifying mode, and exhausts heat from the refrigerant to outside air. Outside air is blown to outside condenser 39 by, for example, a fan. Reservoir tank 39a may be provided at a side of outside condenser 39 from which the refrigerant is fed.

Constituent unit 10 is an integrated component which is manufactured as a single unit at a factory, and is connected with other components of vehicle air conditioner 1 by pipes in a vehicle assembly process. In constituent unit 10, each component may be contained in one housing and integrated or each component may be integrated by being jointed.

Constituent unit 10 includes first water-refrigerant heat exchanger 11, second water-refrigerant heat exchanger 12, ON-OFF valve (corresponding to first switch) 13, solenoid valve equipped expansion valve (corresponding to a second switch, an expansion valve having ON-OFF function) 14.

First water-refrigerant heat exchanger 11 (evaporator) includes a path in which the low-temperature and low-pressure refrigerant flows and a path in which a coolant flows, and performs a heat exchange between the refrigerant and the coolant. In first water-refrigerant heat exchanger 11, solenoid valve equipped expansion valve 14 discharges the low-temperature and low-pressure refrigerant in a predetermined operation mode to transfer heat from the coolant to the low-temperature and low-pressure refrigerant. Thus, first water-refrigerant heat exchanger 11 vaporizes the low-temperature and low-pressure refrigerant.

A coolant inlet of first water-refrigerant heat exchanger 11 is connected to heater core 44 through a pipe, and a coolant outlet is connected to engine cooling portion 40 through a pipe. The refrigerant inlet of first water-refrigerant heat exchanger 11 is connected to solenoid valve equipped expansion valve 14 through a pipe, and the refrigerant outlet is connected to a pipe which joins a suction port of compressor 38.

Second water-refrigerant heat exchanger 12 (condenser) includes a path in which a high-temperature and high-pressure refrigerant flows and a path in which a coolant flows, and performs a heat exchange between the refrigerant and the coolant. Second water-refrigerant heat exchanger 12 receives a flow of the high-temperature and high-pressure refrigerant fed from compressor 38 in an operation mode when the temperature of the coolant is low, and exhausts heat to the coolant from the high-temperature and high-pressure refrigerant. When the temperature of the coolant is low, second water-refrigerant heat exchanger 12 condenses the high-temperature and high-pressure refrigerant.

A coolant inlet of second water-refrigerant heat exchanger 12 is connected to engine cooling portion 40 through a pipe, and a coolant outlet is connected to heater core 44 through a pipe. The refrigerant inlet of second water-refrigerant heat exchanger 12 is connected to a discharge port of compressor 38 through a pipe, and the refrigerant outlet is connected to ON-OFF valve 13 and solenoid valve equipped expansion valve 14 through a branching pipe.

ON-OFF valve 13 is a valve which is, for example, electrically controlled to open and close a refrigerant pipe. ON-OFF valve 13 is, for example, a solenoid valve.

Solenoid valve equipped expansion valve 14 is a valve which is, for example, electrically controlled to switch to open or close the refrigerant pipe, and functions as an expansion valve when the refrigerant pipe is opened. Solenoid valve equipped expansion valve 14 may be a thermal expansion valve (TXV) which automatically adjusts a refrigerant flow rate based on a refrigerant temperature of the refrigerant outlet of first water-refrigerant heat exchanger 11 when functioning as the expansion valve.

Check valve 15 is a valve which is provided between compressor 38 and evaporator 48, and prevents a reverse flow of the refrigerant in an operation mode in which the refrigerant does not flow to outside condenser 39 and evaporator 48. In this regard, an operation mode in which ON-OFF valve 13 is closed and the refrigerant flows to a refrigerant circuit which passes through first water-refrigerant heat exchanger 11 and second water-refrigerant heat exchanger 12 will be considered. According to this operation mode, ON-OFF valve 13 is closed, and therefore the refrigerant circuit passing through outside condenser 39 and evaporator 48 is interrupted. Further, even in this case, when the temperature of outside air is low, a refrigerant pressure in outside condenser 39 and evaporator 48 lowers in some cases. Furthermore, when the pressure lowers in this way, the refrigerant flowing to the refrigerant circuit passing through first water-refrigerant heat exchanger 11 and second water-refrigerant heat exchanger 12 reversely flows to the refrigerant circuit passing through evaporator 48. As a result, the amount of refrigerant in the refrigerant circuit passing through first water-refrigerant heat exchanger 11 and second water-refrigerant heat exchanger 12 deviates from an optimal range, and efficiency of this heat pump cycle lowers. However, check valve 15 is provided, so that it is possible to avoid such inconvenience.

Next, an operation of vehicle air conditioner 1 will be described.

Vehicle air conditioner 1 operates by being switched to some operation modes such as a hot water heating mode, a heat pump heating mode, a temperature adjusting mode, and a cooling mode. The hot water heating mode is a mode of heating the interior of the vehicle without operating the heat pump. The heat pump heating mode is a mode of heating the interior of the vehicle by operating the heat pump. The cooling mode is a mode of cooling the interior of the vehicle by an operation of the heat pump. Further, it is also possible to select a temperature adjusting mode of adjusting the temperature and the humidity of air by optionally cooling and dehumidifying air by using the low-temperature refrigerant, and heating air by using the high-temperature coolant. The heat pump heating mode and the cooling mode will be described below as typical examples.

### [Heat Pump Heating Mode]

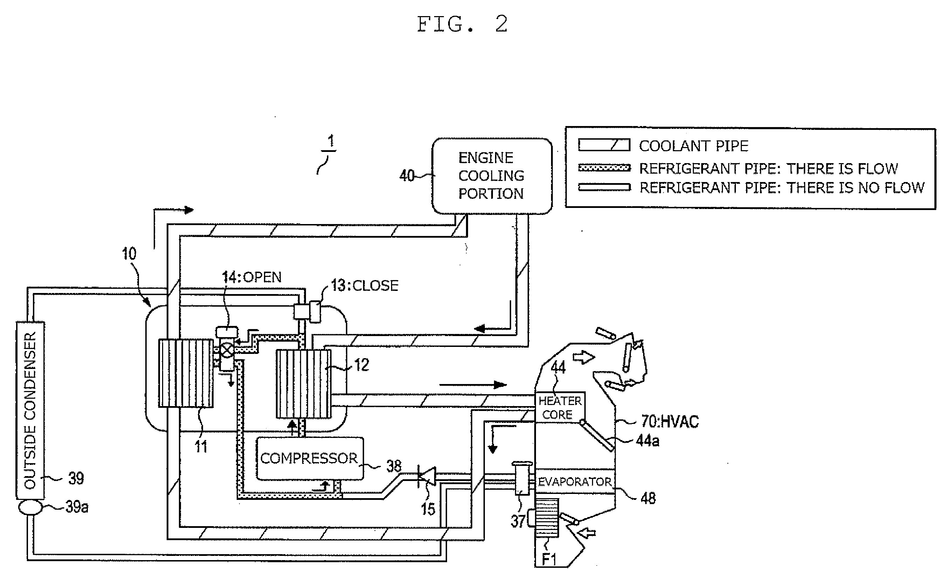

FIG. 2 is a diagram for illustrating an operation of a heat pump heating mode.

According to the heat pump heating mode, as illustrated in FIG. 2, ON-OFF valve 13 is switched to close, and solenoid valve equipped expansion valve 14 is switched to open (thermal expansion valve operation). Further, door 44a of heater core 44 is opened (fully opened, for example).

Furthermore, when compressor 38 operates, the refrigerant circulates in order of second water-refrigerant heat exchanger 12, solenoid valve equipped expansion valve 14, first water-refrigerant heat exchanger 11, and compressor 38.

In this regard, the high-temperature and high-pressure refrigerant compressed by compressor 38 radiates heat in second water-refrigerant heat exchanger 12, and the refrigerant condenses. The condensed refrigerant is expanded as the low-temperature and low-pressure refrigerant by solenoid valve equipped expansion valve 14, and is fed to first water-refrigerant heat exchanger 11. The low-temperature and low-pressure refrigerant absorbs heat from the coolant in first water-refrigerant heat exchanger 11, and the refrigerant vaporizes. The vaporized low-pressure refrigerant is suctioned and compressed by compressor 38.

The coolant circulates in order of engine cooling portion 40, second water-refrigerant heat exchanger 12, heater core 44 and first water-refrigerant heat exchanger 11.

In this regard, the coolant having heat absorbed from the engine in engine cooling portion 40 is further heated by second water-refrigerant heat exchanger 12 and is fed to heater core 44. In heater core 44, the coolant whose temperature has become high can sufficiently heat suction air fed to the interior of the vehicle.

The coolant having passed through heater core 44 has a higher temperature than outside air, and can radiate heat to the refrigerant and vaporizes the refrigerant in first water-refrigerant heat exchanger 11. The coolant having been cooled by first water-refrigerant heat exchanger 11 is fed to engine cooling portion 40 and can sufficiently cool the engine.

According to this operation, it is possible to sufficiently warm the interior of the vehicle.

### [Cooling Mode]

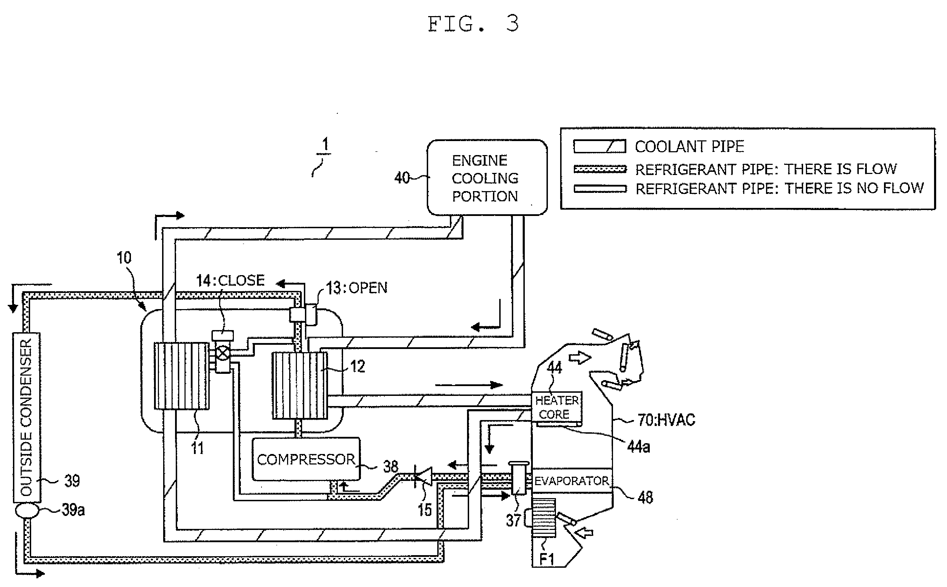

FIG. 3 is a diagram for illustrating an operation of the cooling mode.

According to the cooling mode, as illustrated in FIG. 3, ON-OFF valve 13 is switched to open and solenoid valve equipped expansion valve 14 is switched to close. Further, door 44a of heater core 44 is fully closed.

Furthermore, when compressor 38 operates, the refrigerant circulates in order of second water-refrigerant heat exchanger 12, outside condenser 39, expansion valve 37, evaporator 48, and compressor 38.

The coolant is not cooled in first water-refrigerant heat exchanger 11, and therefore has a relatively higher temperature. Heat is radiated from the coolant mainly by a radiator of engine cooling portion 40. The temperature of the engine becomes very high, and therefore even when the temperature of outside air is high, it is possible to adequately cool the interior of the vehicle by heat radiation from the radiator. In this regard, a configuration in which the coolant flows may make a more coolant flow to the radiator than to heater core 44 by lowering a coolant flow to heater core 44.

An amount of heat radiation from the high-temperature and high-pressure refrigerant is not large in second water-refrigerant heat exchanger 12, because the temperature of the coolant in second water-refrigerant heat exchanger 12 becomes high. Accordingly, the high-temperature and high-pressure refrigerant is fed to outside condenser 39, and then condenses by radiating heat to air in outside condenser 39.

The condensed refrigerant is fed toward evaporator 48. The refrigerant, at first, expands at expansion valve 37 to become a low-temperature and low-pressure refrigerant, and then cools an air-blast to the interior of the vehicle at evaporator 48. The refrigerant is vaporized by this heat exchange. The vaporized low-pressure refrigerant is suctioned and compressed by compressor 38.

The temperature of the coolant flowing in second water-refrigerant heat exchanger 12, heater core 44, and first water-refrigerant heat exchanger 11 becomes high. However, an amount of heat radiation to suction air fed to the interior of the vehicle can be adjusted by adjusting an opening of door 44a of heater core 44.

According to this operation, it is possible to sufficiently cool the interior of the vehicle.

As described above, vehicle air conditioner 1 according to the present exemplary embodiment employs a basic configuration including a configuration of a hot water heater which causes an engine coolant to flow to heater core 44 to use for heating, and a configuration of a heat pump cooler which uses a low-temperature and low-pressure refrigerant of the heat pump for cooling. Further, by adding constituent unit 10 to this basic configuration, it possible to warm the interior of the vehicle by using the heat pump. With this configuration, even when the temperature of the engine is low, the operation of the heat pump makes it possible to quickly warm the interior of the vehicle with small energy.

That is to say, according to the present disclosure, it is possible to employ a basic configuration including a hot water heater which is adopted for a conventional vehicle, and a heat pump cooler which is adopted for a conventional vehicle, and can enhance heating performance by using a common compressor and a refrigerant in cooling and heating.

Generally, when the temperature of outside air is high and the interior of the vehicle needs to be cooled by the operation of the heat pump, a thermal contact between the high-temperature and high-pressure refrigerant compressed by compressor 38 and the coolant is considered to be avoided. However, in the present exemplary embodiment, it has been focused upon that the temperature of the coolant is already high in second water-refrigerant heat exchanger 12, and therefore a thermal contact between the refrigerant and the coolant does not cause a significant influence. Further, even in a cooling operation, flows of the coolant and the refrigerant are not bypassed to second water-refrigerant heat exchanger 12, and a bypass configuration is not employed. Consequently, it is possible to simplify a pipe configuration, reduce a number of parts of vehicle air conditioner 1 and reduce manufacturing cost.

### MODIFIED EXAMPLE

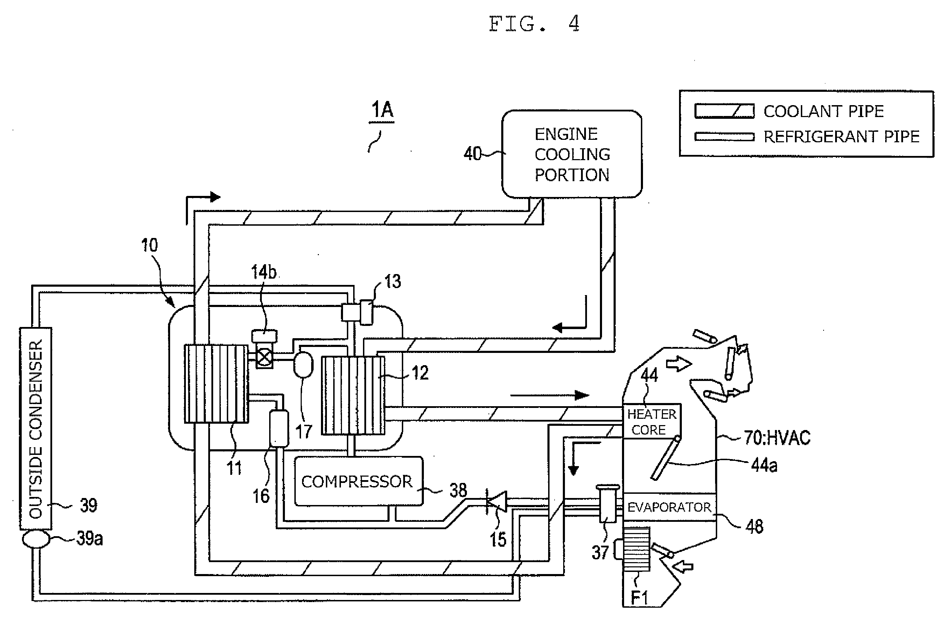

FIG. 4 is a configuration diagram of a vehicle air conditioner according to the modified example of the exemplary embodiment of the present disclosure.

According to this modified example, two changes are added to the exemplary embodiment in FIG. 1. The same components as those components in FIG. 1 will be assigned the same reference numerals and will not be described in detail.

A first change is that vehicle air conditioner 1A according to the modified example includes liquid tank 17 disposed on a refrigerant path between second water-refrigerant heat exchanger 12 and first water-refrigerant heat exchanger 11. More specifically, liquid tank 17 is provided between a branching portion of a refrigerant path at the refrigerant outlet side of second water-refrigerant heat exchanger 12, and an expansion valve (14b) at a refrigerant inlet side of first water-refrigerant heat exchanger 11.

In addition, liquid tank 17 may be provided at any position as long as the position lies between the refrigerant outlet of second water-refrigerant heat exchanger 12 and the expansion valve of solenoid valve equipped expansion valve 14b. Liquid tank 17 may be formed integrally with second water-refrigerant heat exchanger 12.

Optimal amounts of refrigerant which circulates at a refrigerant cycle are different between in a cooling operation and in a heating operation. Liquid tank 17 can absorb this difference in the amounts of refrigerant.

A second change is that vehicle air conditioner 1A according to the modified example includes, as solenoid valve equipped expansion valve 14b, a configuration in which a refrigerant expands by flowing through a refrigerant path (e.g. an orifice) which is limited throughput of the refrigerant to a certain amount (referred to as an orifice equipped solenoid valve).

Further, vehicle air conditioner 1A according to the modified example includes accumulator 16 disposed on the refrigerant path between first water-refrigerant heat exchanger 11 and compressor 38, corresponding to a configuration of expanding the refrigerant through the refrigerant path limited throughput of the refrigerant to a certain amount. In the configuration of expanding the refrigerant by passing the refrigerant through the path limited the throughput to a certain amount, the refrigerant having passed through first water-refrigerant heat exchanger 11 is not sufficiently vaporized in some cases. Therefore, a refrigerant of a vapor phase is separated by accumulator 16 and is fed to compressor 38.

Vehicle air conditioner 1A according to the modified example can cool and warm the interior of the vehicle at the same cycle as the above described cycle.

In addition, the vehicle air conditioner according to the modified example may employ a configuration to which only the first change is applied or a configuration to which only the second change is applied.

Further, according to vehicle air conditioner 1 according to the present exemplary embodiment, a refrigerant path from second water-refrigerant heat exchanger 12 to first water-refrigerant heat exchanger 11, and a refrigerant path from second water-refrigerant heat exchanger 12 to evaporator 48 via outside condenser 39 are different. Consequently, it is possible to tune the refrigerant paths differently according to a plurality of operation modes to support a plurality of operation modes (e.g. the cooling mode and the heat pump heating mode). Furthermore, vehicle air conditioner 1 according to the present exemplary embodiment includes expansion valve 14 which expands a refrigerant before the refrigerant reaches first water-refrigerant heat exchanger 11, and expansion valve 37 which expands the refrigerant before the refrigerant reaches evaporator 48. Consequently, it is possible to tune the expansion valve differently according to a plurality of different operation modes to support a plurality of operation modes. According to the present exemplary embodiment, a heat exchange is performed between air and a refrigerant in the cooling mode, and a heat exchange is performed between a coolant and a refrigerant in a heat pump heating mode. However, it is possible to perform tuning according to a plurality of operation modes, and, consequently, it is possible to exhibit operation performance dedicated to each operation mode. Further, it is possible to smoothly switch an operation mode. Furthermore, when the refrigerant path from second water-refrigerant heat exchanger 12 to first water-refrigerant heat exchanger 11, and the refrigerant path from second water-refrigerant heat exchanger 12 to evaporator 48 via outside condenser 39 are common, there is a problem that it is difficult collect the refrigerant since the refrigerant accumulates in outside condenser 39 upon switch of the operation mode, and the amount of refrigerant becomes unstable. However, vehicle air conditioner 1 according to the present exemplary embodiment hardly causes such a problem.

The exemplary embodiment of the present disclosure has been described above.

In addition, a configuration where solenoid valve equipped expansion valves 14, 14b are adopted as a second switch has been described as an example in the above exemplary embodiment. However, a configuration where a solenoid ON-OFF valve and an expansion valve may be separately provided and connected by a pipe may be employed as the second switch. Further, a configuration where ON-OFF valve 13 is provided to constituent unit 10 has been described as an example in the above exemplary embodiment. However, ON-OFF valve 13 may be provided outside constituent unit 10.

Furthermore, a configuration where ON-OFF valve 13 and solenoid valve equipped expansion valves 14 are adopted as a first switch and a second switch has been described as an example in the above exemplary embodiment. However, functions of ON-OFF valve 13 and a solenoid valve of solenoid valve equipped expansion valve 14 can be realized by a three way valve disposed at a branching portion of the refrigerant pipe which branches from the refrigerant feeding port of second water-refrigerant heat exchanger 12 toward outside condenser 39 and toward first water-refrigerant heat exchanger 11.

Further, the engine has been described as an example of a heating component of the vehicle in the above exemplary embodiment. However, the heating component of the vehicle may adopt various heating component s such as an electric motor of an electric vehicle for driving or a rechargeable battery which supplies power for driving.

Disclosures of the description, the drawings and the abstract included in Japanese Patent Application No. 2013-148125 filed on July 17, 2013, are entirely incorporated in this application.

### INDUSTRIAL APPLICABILITY

The present disclosure can be used for a vehicle air conditioner which is mounted on various vehicles such as engine cars, electric vehicles, or HEV cars.

### REFERENCE MARKS IN THE DRAWINGS

1, 1A vehicle air conditioner
10 constituent unit
11 first water-refrigerant heat exchanger
12 second water-refrigerant heat exchanger
13 ON-OFF valve (first switch)
14, 14b solenoid valve equipped expansion valve (second switch, expansion valve having ON-OFF function)
15 check valve
16 accumulator
17 liquid tank
37 expansion valve
38 compressor
39 outside condenser
40 engine cooling portion
44 heater core
44a door
48 evaporator
70 HVAC

## Claims

1. A vehicle air conditioner comprising:
a first water-refrigerant heat exchanger which performs a heat exchange between a low-temperature and low-pressure refrigerant and a coolant for heat transportation, and vaporizes the refrigerant;
a second water-refrigerant heat exchanger which performs a heat exchange between a high-temperature and high-pressure refrigerant and the coolant, and condenses the refrigerant;
a first switch which can switch between a state where the refrigerant fed from the second water-refrigerant heat exchanger is fed to an evaporator which cools an air-blast to an interior of a vehicle by using the refrigerant, and a state where the refrigerant is not fed to the evaporator; and
a second switch which can switch between a state where the refrigerant fed from the second water-refrigerant heat exchanger is expanded and fed to the first water-refrigerant heat exchanger, and a state where the refrigerant is not fed to the first water-refrigerant exchanger,
wherein:
the first water-refrigerant heat exchanger inputs the coolant from a heater core which heats the air-blast to the interior of the vehicle, feeds the coolant to a cooling portion of a heating component of a vehicle, and feeds the refrigerant to a compressor, and
the second water-refrigerant heat exchanger inputs the coolant from the cooling portion of the heating component, feeds the coolant to the heater core, and inputs the high-temperature and high-pressure refrigerant from the compressor.

2. The vehicle air conditioner according to claim 1, further comprising a condenser which radiates heat from the high-temperature and high-pressure refrigerant to outside air, and condenses the refrigerant,
wherein the first switch and the second switch can switch at least between a state of a cooling mode where the refrigerant flows in a circulation route including the second water-refrigerant heat exchanger, the condenser, the evaporator and the compressor, and yet the refrigerant does not flow to the first water-refrigerant heat exchanger, and a state of a heat pump heating mode where the refrigerant flows in a circulation route including the second water-refrigerant heat exchanger, the first water-refrigerant heat exchanger, and the compressor.

3. The vehicle air conditioner according to claim 1 or 2, wherein:
the first switch is an ON-OFF valve which is disposed on a path in which the refrigerant is fed from the second water-refrigerant heat exchanger to the evaporator, and
the second switch is an expansion valve having an ON-OFF function and is disposed on a path in which the refrigerant is fed from the second water-refrigerant heat exchanger to the first water-refrigerant heat exchanger.

4. The vehicle air conditioner according to any one of claims 1 to 3, further comprising a check valve which is disposed on a path in which the refrigerant flows from the evaporator to the compressor.

5. The vehicle air conditioner according to any one of claims 1 to 4, wherein the heating component is an internal combustion engine.

6. The vehicle air conditioner according to any one of claims 1 to 5, wherein
the first water-refrigerant heat exchanger, the second water-refrigerant heat exchanger, the first switch, and the second switch are integrated into one unit, and
the compressor is provided outside the unit.

7. The vehicle air conditioner according to claim 3, wherein the expansion valve having the ON-OFF function includes a solenoid ON-OFF valve and a thermal expansion valve which changes a refrigerant flow rate by temperature control.

8. The vehicle air conditioner according to claim 3, wherein:
the expansion valve having the ON-OFF function employs a configuration including a solenoid ON-OFF valve and a refrigerant path of which throughput is limited to a certain amount, and
the vehicle air conditioner further includes an accumulator which is disposed on a path at the side of a refrigerant inlet of the compressor.

9. The vehicle air conditioner according to any one of claims 1 to 8, further comprising a liquid tank which stores the refrigerant condensed by the second water-refrigerant heat exchanger.

10. The vehicle air conditioner according to claim 9, wherein the liquid tank is integrally formed with the second water-refrigerant heat exchanger.

11. A constituent unit of a vehicle air conditioner, the constituent unit comprising:
a first water-refrigerant heat exchanger which performs a heat exchange between a low-temperature and low-pressure refrigerant and a coolant for heat transportation, and vaporizes the refrigerant,
a second water-refrigerant heat exchanger which performs a heat exchange between a high-temperature and high-pressure refrigerant and the coolant, and condenses the refrigerant,
a first switch which can switch between a state where the refrigerant fed from the second water-refrigerant heat exchanger is fed to an evaporator which cools an air-blast to an interior of a vehicle by using the refrigerant, and a state where the refrigerant is not fed to the evaporator, and
a second switch which can switch between a state where the refrigerant fed from the second water-refrigerant heat exchanger is expanded and fed to the second water-refrigerant heat exchanger, and a state where the refrigerant is not fed to the second water-refrigerant exchanger,
wherein the first and the second water-refrigerant exchangers, and the first and the second switches are integrated into the constituent unit.
